# EUROPÄISCHE PATENTANMELDUNG

(11) **EP 3 231 690 A1**
(43) Veröffentlichungstag der Anmeldung: **18.10.2017**
(21) Anmeldenummer: 17162258.2
(22) Anmeldetag: 22.03.2017
(51) Int. Cl.: B62D 15/02, B60K 35/00, G08G 1/16

(54) **VERFAHREN UND VORRICHTUNG ZUR UNTERSTÜTZUNG EINES PARKMANÖVERS**

(30) Priorität: 13.04.2016 DE 102016206123
(71) Anmelder: Ford Global Technologies, LLC, Dearborn, MI 48126 (US)
(72) Erfinder: Urhahne, Joseph, 50259 Pulheim (DE); Spahl, Robert, 51109 Köln (DE)
(74) Vertreter: Dörfler, Thomas

(57) **Zusammenfassung**

Die Erfindung betrifft ein Verfahren und eine Vorrichtung zur Unterstützung eines Parkmanövers eines Fahrzeugs, wobei das Fahrzeug eine Einparkhilfe (PDC) aufweist, welche während eines Parkmanövers ein im Innenraum des Fahrzeugs wahrnehmbares erstes Signal erzeugt, wobei eine Signaleigenschaft dieses ersten Signals dem jeweils aktuell vorliegenden Abstand des Fahrzeugs zu einem Parkhindernis angepasst ist, wobei das Verfahren folgende Schritte aufweist: Übersetzen des ersten Signals in ein für eine außerhalb des Fahrzeugs (10) befindliche Bedienperson (20) wahrnehmbares zweites Signal, und Übermitteln dieses zweiten Signals an die außerhalb des Fahrzeugs (10) befindliche Bedienperson (20) während einer ferngesteuerten Durchführung des Parkmanövers.

## Beschreibung

Die Erfindung betrifft ein Verfahren und eine Vorrichtung zur Unterstützung eines Parkmanövers.

Vorrichtungen zum ferngesteuerten Einparken werden zunächst in Fahrzeugen der Luxusklasse angeboten. Hintergrund hierfür ist u.a., dass zur Realisierung vollständig ferngesteuerter Einparkvorgänge eine hinreichende Ausstattung des jeweiligen Fahrzeugs mit hochentwickelten Sensoren erforderlich ist, wozu auch die Einbeziehung von Ultraschall-, Laser-, Radar- und Video-Technologien gehört.

Allerdings ist in der Praxis die Funktionalität des ferngesteuerten Einparkens auch in Fahrzeugen der Mittelklasse sowie in für den Stadtverkehr ausgelegten Fahrzeugen bzw. Kleinwagen wünschenswert. Da in diesen Fahrzeugklassen die Ausstattungsquote mit hochwertigen Sensortechnologien eher gering ist, besteht in der Praxis ein Bedarf nach kosteneffizienten Lösungen, um die Funktionalität des ferngesteuerten Einparkens auch in solchen Fahrzeugen zu verwirklichen.

Aus EP 2 617 627 A2 sind u.a. ein System und ein Verfahren zur Fernsteuerung eines Fahrzeugs bekannt, wobei das Fahrzeug eine Sendeempfangseinrichtung umfasst, welche mit einer Fernsteuerungseinrichtung Signale austauscht. Das System ist insbesondere eingerichtet, Signale von Beschleunigungssensoren und/oder Lagesensoren der Fernsteuerungseinrichtung auszuwerten und Fahrzeugbewegungen entsprechend der Signale zu steuern. Des Weiteren kann in der Fernbedienung eine "Totmann-Taster"-Funktion vorgesehen sein, bei welcher der Anwender eine Taste gedrückt halten und/oder wiederholt betätigen muss, um die ferngesteuerte Bewegung des Fahrzeugs zu ermöglichen.

Aus DE 10 2012 008 858 A1 ist u.a. ein Verfahren zur Durchführung eines autonomen Parkvorgangs eines Kraftfahrzeugs bekannt, wobei zwischen einem sich außerhalb des Kraftfahrzeugs befindlichen Bediener und dem Kraftfahrzeug eine Kommunikationsverbindung besteht, durch welche zumindest ein Befehl zum Aktivieren des autonomen Parkvorgangs des Kraftfahrzeugs übertragbar ist. Dabei kann ein Signalisieren einer Veränderung der Umgebung des Kraftfahrzeugs seit dem autonomen Verbringen in die Zielposition, z.B. ein neu geparktes Fahrzeug im Umfeld des Kraftfahrzeugs, beispielsweise durch Betätigung der Hupe und/oder Betätigung der Warnblinkanlage erfolgen. Des Weiteren kann die Bewegung des Kraftfahrzeugs während des autonomen Parkvorgangs gestoppt werden, sobald der Bediener eine vorbestimmte Bedienhandlung auf der Kommunikationseinrichtung einstellt.

Aus EP 2 821 807 A2 ist u.a. ein Verfahren zum Bestimmen einer Position einer einem Fahrzeug zugeordneten Vorrichtung bekannt, wobei mehrere Ultraschallsignale in einer vorgegebenen zeitlichen Reihenfolge von mehreren unterschiedlichen Sendepositionen an dem Fahrzeug ausgesendet werden und wobei die Position der Vorrichtung in Abhängigkeit von den empfangenen Ultraschallsignalen und der vorgegebenen zeitlichen Reihenfolge bestimmt wird.

Zum weiteren Stand der Technik wird beispielhaft auf DE 10 2011 084 366 A1 und US 2015/0149022 A1 verwiesen.

Es ist eine Aufgabe der vorliegenden Erfindung, ein Verfahren und eine Vorrichtung zur Unterstützung eines Parkmanövers bereitzustellen, welche eine Realisierung der Funktionalität des ferngesteuerten Einparkens mit möglichst geringem technischen Aufwand ermöglichen.

Diese Aufgabe wird durch das Verfahren gemäß den Merkmalen des unabhängigen Patentanspruchs 1 bzw. die Vorrichtung gemäß den Merkmalen des nebengeordneten Patentanspruchs 11 gelöst.

Ein erfindungsgemäßes Verfahren zur Unterstützung eines Parkmanövers eines Fahrzeugs, wobei das Fahrzeug eine Einparkhilfe (PDC) aufweist, welche während eines Parkmanövers ein im Innenraum des Fahrzeugs wahrnehmbares erstes Signal erzeugt, wobei eine Signaleigenschaft dieses ersten Signals dem jeweils aktuell vorliegenden Abstand des Fahrzeugs zu einem Parkhindernis angepasst ist, weist folgende Schritte auf:
- Übersetzen des ersten Signals in ein für eine außerhalb des Fahrzeugs befindliche Bedienperson wahrnehmbares zweites Signal; und
- Übermitteln dieses zweiten Signals an die außerhalb des Fahrzeugs befindliche Bedienperson während einer ferngesteuerten Durchführung des Parkmanövers.

Der Erfindung liegt insbesondere das Konzept zugrunde, die Funktionalität des ferngesteuerten Einparkens auf Basis von Standardausstattungen wie einer herkömmlichen Einparkhilfe (PDC = "Park Distance Control") zu realisieren. Hierbei werden standardmäßig Parkabstände über ein im Innenraum des Fahrzeugs wahrnehmbares Signal wie z.B. über einen hörbaren Ton signalisiert, wobei eine Signaleigenschaft wie z.B. die Frequenz des Tons dem jeweils während des Parkmanövers vorhandenen aktuellen Abstand zu einem Hindernis wie z.B. einer Mauer angepasst ist. Dabei ist für den jeweiligen Fahrer ohne weiteres ersichtlich, wann er das Fahrzeug bei Annäherung an die endgültige Parkposition zum Stehen bringen muss.

Gemäß der Erfindung wird nun dieses standardmäßig verfügbare Rückmeldesignal ("Feedback-Signal) der Einparkhilfe (PDC) verwendet und in ein im Bereich außerhalb des Fahrzeugs wahrnehmbares Signal übersetzt, wo das betreffende Signal zur Durchführung eines ferngesteuerten Parkmanövers genutzt wird.

Der Umstand, dass erfindungsgemäß die Ausstattung des betreffenden Fahrzeugs mit einer Fernsteuerung und einer Einparkhilfe erforderlich ist, hat den Vorteil, dass derartige Vorrichtungen bei sämtlichen aktuellen Fahrzeugen i.d.R. verfügbar sind, so dass auf einer bereits vorhandenen Infrastruktur des Fahrzeugs aufgebaut wird. Des Weiteren ist das Fahrzeug, in welchem die vorliegende Erfindung implementiert wird, vorzugsweise dazu in der Lage, unter Verwendung des Antriebsstrangs sowie des Bremssystems ein sehr langsames automatisches Manöver zum ferngesteuerten Einparken (z.B. mit einer Geschwindigkeit von 2km/h) durchzuführen.

Gemäß einer Ausführungsform erfolgt das Übersetzen des ersten Signals in das zweite Signal derart, dass eine Signaleigenschaft dieses zweiten Signals dem jeweils aktuell vorliegenden Abstand des Fahrzeugs zu einem Parkhindernis angepasst ist.

Gemäß einer Ausführungsform ist das zweite Signal rings um das Fahrzeug im gesamten 360°-Winkelbereich wahrnehmbar.

Gemäß einer Ausführungsform wird das Übersetzen des ersten Signals in das zweite Signal während einer ferngesteuerten Durchführung des Parkmanövers kontinuierlich durchgeführt.

Gemäß einer Ausführungsform ist die Signaleigenschaft des ersten bzw. zweiten Signals die Frequenz des betreffenden Signals.

Gemäß einer Ausführungsform wird das zweite Signal durch eine rings um das Fahrzeug im gesamten 360°-Winkelbereich sichtbare Fahrzeugbeleuchtung übermittelt.

Gemäß einer Ausführungsform wird das zweite Signal durch einen akustischen Signalgeber, insbesondere eine Fahrzeughupe, übermittelt.

Gemäß einer Ausführungsform wird das zweite Signal durch eine tragbare Einheit, insbesondere einen Schlüsselanhänger oder einer Fernbedienung, übermittelt. Die Fernbedienung kann dabei die für den Einparkvorgang verwendete Fernbedienung sein.

Gemäß einer Ausführungsform wird das zweite Signal als haptisches Signal übermittelt.

Gemäß einer Ausführungsform wird ein sofortiger Fahrzeugstopp herbeigeführt, sobald die Bedienperson eine vorbestimmte Bedienhandlung einstellt.

Die Erfindung betrifft weiter eine Vorrichtung zur Unterstützung eines Parkmanövers eines Fahrzeugs, wobei das Fahrzeug eine Einparkhilfe (PDC) aufweist, über welche während eines Parkmanövers ein im Innenraum des Fahrzeugs wahrnehmbares erstes Signal erzeugbar ist, wobei eine Signaleigenschaft dieses ersten Signals dem jeweils aktuell vorliegenden Abstand des Fahrzeugs zu einem Parkhindernis angepasst ist, und wobei die Vorrichtung dazu konfiguriert ist, ein Verfahren mit den vorstehend beschriebenen Merkmalen durchzuführen. Zu Vorteilen und bevorzugten Ausgestaltungen der Vorrichtung wird auf die vorstehenden Ausführungen im Zusammenhang mit dem erfindungsgemäßen Verfahren verwiesen.

Weitere Ausgestaltungen der Erfindung sind der Beschreibung sowie den Unteransprüchen zu entnehmen.

Die Erfindung wird nachstehend anhand beispielhafter Ausführungsformen unter Bezugnahme auf die beigefügten Abbildungen näher erläutert.

Es zeigen:
- Figur 1: eine schematische Skizze zur Veranschaulichung eines gemäß der Erfindung durchgeführten ferngesteuerten Parkmanövers; und
- Figur 2-3: schematische Darstellungen zur Erläuterung möglicher Ausführungsformen der Erfindung.

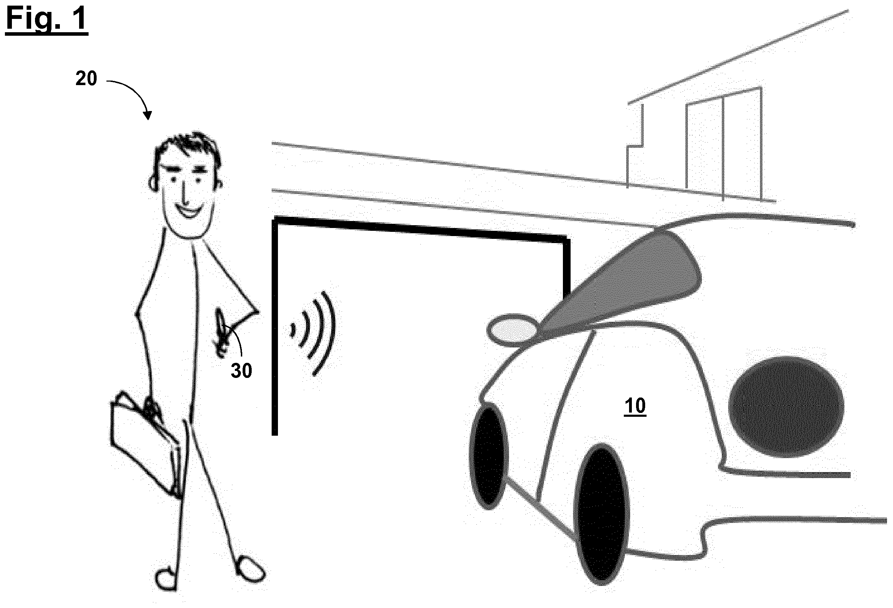

Fig. 1 zeigt lediglich schematisch ein Fahrzeug 10 sowie eine außerhalb des Fahrzeugs 10 befindliche Bedienperson 20 während einer ferngesteuerten Durchführung des Parkmanövers, welche als tragbare Einheit einen Schlüsselanhänger 30 hält. Der Schlüsselanhänger 30 dient hier als Fernbedienung für das Parkmanöver. Das Fahrzeug 10 weist eine Einparkhilfe (PDC) auf, welche während eines Parkmanövers ein im Innenraum des Fahrzeugs 10 wahrnehmbares Signal (z.B. einen im Innenraum des Fahrzeugs 10 hörbaren Ton) erzeugt, wobei eine Signaleigenschaft (z.B. die Frequenz) dieses Signals dem jeweils aktuell vorliegenden Abstand des Fahrzeugs 10 zu einem Parkhindernis angepasst ist.

Da die außerhalb des Fahrzeugs 10 befindliche Bedienperson 20 im o.g. Beispiel den im Innenraum des Fahrzeugs 10 durch die Einparkhilfe (PDC) erzeugten Ton (im Weiteren als "erstes Signal" bzw. Rückmeldesignal der Einparkhilfe bezeichnet) nicht hören kann, wird ein entsprechendes zweites Signal in den Bereich außerhalb des Fahrzeugs 10 übertragen, wobei dies in unterschiedlicher Weise erfolgen kann:
- Ein hörbarer Ton, welcher insbesondere eine zum Rückmeldesignal der Einparkhilfe (PDC) abhängige oder hierzu identische Signalform aufweisen kann, kann mit der Fahrzeughupe oder durch einen Signaltongeber im Schlüsselanhänger 30 erzeugt werden.
- Ein haptisches Signal mit vom Rückmeldesignal der Einparkhilfe (PDC) abhängiger oder hierzu identischer Signalform kann in einem Vibrationselement im Schlüsselanhänger 30 erzeugt werden.
- Ein sichtbares Signal mit vom Rückmeldesignal der Einparkhilfe (PDC) abhängiger oder hierzu identischer Signalform kann durch eine im Bereich rings um das komplette Fahrzeug 10 vorhandene, im gesamten Winkelbereich von 360° sichtbare Fahrzeugbeleuchtung erzeugt werden.
- Ein sichtbares Signal mit vom Rückmeldesignal der Einparkhilfe (PDC) abhängiger oder hierzu identischer Signalform kann durch ein beliebiges von außen sichtbares Element des Fahrzeugs 10, z.B. auf im gesamten Winkelbereich von 360° rings um das Fahrzeug sichtbaren Bildschirmen bereitgestellt werden.
- Ein sichtbares Signal mit von Rückmeldesignal der Einparkhilfe (PDC) abhängiger oder hierzu identischer Signalform kann als Lichtsignal in dem Schlüsselanhänger 30 erzeugt werden.

Um also das Rückmeldesignal der Einparkhilfe zur Durchführung des ferngesteuerten Parkmanövers zu nutzen, wird erfindungsgemäß dieses Rückmeldesignal in ein für die außerhalb des Fahrzeugs 10 befindliche Bedienperson 20 wahrnehmbares zweites Signal übersetzt, und das zweite Signal wird kontinuierlich an die Bedienperson 20 während der ferngesteuerten Durchführung des Parkmanövers übermittelt.

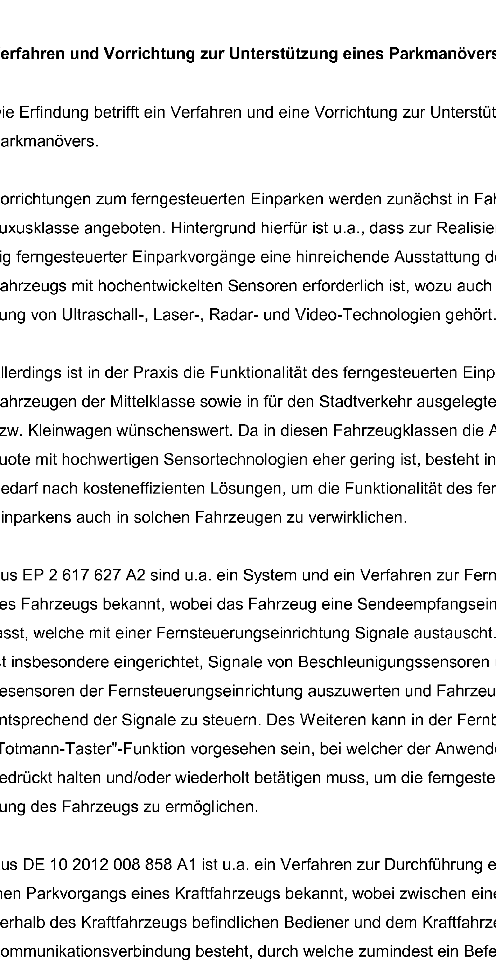

In einer in Fig. 2 schematisch dargestellten Ausführungsform der Erfindung kann das Fahrzeug 10 mit einer Beleuchtungsanlage ausgestattet sein, die ein Lichtsignal 40, welches von sämtlichen möglichen Positionen der Bedienperson 20 rings um das Fahrzeug 10 herum sichtbar ist, im Blinkmodus oder im kontinuierlichen Modus aussenden kann.

In einer weiteren, in Fig. 3 schematisch dargestellten Ausführungsform kann alternativ oder zusätzlich die von der Bedienperson 20 gehaltene tragbare Einheit, d.h. der Schlüsselanhänger 30 bzw. eine Fernsteuerungsvorrichtung, während des ferngesteuerten Parkmanövers ein visuelles bzw. sichtbares Signal, ein hörbares bzw. akustisches Signal und/oder ein Vibrationssignal übermitteln. Dabei kann jeweils wie beim ersten Signal der Einparkhilfe (PDC) eine Signaleigenschaft wie z.B. die Frequenz dieses zweiten Signals dem jeweils aktuell vorliegenden Abstand des Fahrzeugs 10 zu einem Parkhindernis angepasst sein.

Gemäß einer Ausführungsform ist die erfindungsgemäße Vorrichtung (z.B. am Schlüsselanhänger 30 bzw. der Fernsteuerungsvorrichtung) mit einer "Totmann-Taster"-Funktion zum Einparken ausgestattet. Die Bedienperson 20 betätigt bei dieser Funktion eine Taste kontinuierlich, um das Parkmanöver des Fahrzeugs 10 zu starten und aufrechtzuhalten. Sobald die außerhalb des Fahrzeugs 10 befindliche Bedienperson 20 die betreffende Taste loslässt, erfolgt ein sofortiger Stopp des Fahrzeugs 10. Sobald die Bedienperson 20 während der Durchführung des ferngesteuerten Parkmanövers einen kontinuierlichen Signalverlauf wahrnimmt (was auf eine nahezu maximale Annäherung des Fahrzeugs 10 an ein Hindernis hinweist), kann sie den Totmannschalter loslassen, so dass ein sofortiger Fahrzeugstopp herbeigeführt wird.

## Patentansprüche

1. Verfahren zur Unterstützung eines Parkmanövers eines Fahrzeugs, wobei das Fahrzeug eine Einparkhilfe (PDC) aufweist, welche während eines Parkmanövers ein im Innenraum des Fahrzeugs wahrnehmbares erstes Signal erzeugt, wobei eine Signaleigenschaft dieses ersten Signals dem jeweils aktuell vorliegenden Abstand des Fahrzeugs zu einem Parkhindernis angepasst ist,
**dadurch gekennzeichnet, dass**
das Verfahren folgende Schritte aufweist:
Übersetzen des ersten Signals in ein für eine außerhalb des Fahrzeugs (10) befindliche Bedienperson (20) wahrnehmbares zweites Signal; und
Übermitteln dieses zweiten Signals an die außerhalb des Fahrzeugs (10) befindliche Bedienperson (20) während einer ferngesteuerten Durchführung des Parkmanövers.

2. Verfahren nach Anspruch 1,
**dadurch gekennzeichnet, dass**
das Übersetzen des ersten Signals in das zweite Signal derart erfolgt, dass eine Signaleigenschaft dieses zweiten Signals dem jeweils aktuell vorliegenden Abstand des Fahrzeugs (10) zu einem Parkhindernis angepasst ist.

3. Verfahren nach Anspruch 1 oder 2,
**dadurch gekennzeichnet, dass**
das zweite Signal rings um das Fahrzeug (10) im gesamten 360°-Winkelbereich wahrnehmbar ist.

4. Verfahren nach einem der Ansprüche 1 bis 3,
**dadurch gekennzeichnet, dass**
das Übersetzen des ersten Signals in das zweite Signal während einer ferngesteuerten Durchführung des Parkmanövers kontinuierlich durchgeführt wird.

5. Verfahren nach einem der vorhergehenden Ansprüche,
**dadurch gekennzeichnet, dass**
die Signaleigenschaft des ersten bzw. zweiten Signals die Frequenz des betreffenden Signals ist.

6. Verfahren nach einem der vorhergehenden Ansprüche,
**dadurch gekennzeichnet, dass**
das zweite Signal durch eine rings um das Fahrzeug (10) im gesamten 360°-Winkelbereich sichtbare Fahrzeugbeleuchtung (40) übermittelt wird.

7. Verfahren nach einem der vorhergehenden Ansprüche,
**dadurch gekennzeichnet, dass**
das zweite Signal durch einen akustischen Signalgeber, insbesondere eine Fahrzeughupe, übermittelt wird.

8. Verfahren nach einem der vorhergehenden Ansprüche,
**dadurch gekennzeichnet, dass**
das zweite Signal durch eine tragbare Einheit, insbesondere einen Schlüsselanhänger (30) oder einer Fernbedienung, übermittelt wird.

9. Verfahren nach einem der vorhergehenden Ansprüche,
**dadurch gekennzeichnet, dass**
das zweite Signal als haptisches Signal übermittelt wird.

10. Verfahren nach einem der vorhergehenden Ansprüche,
**dadurch gekennzeichnet, dass**
ein sofortiger Fahrzeugstopp herbeigeführt wird, sobald die Bedienperson (20) eine vorbestimmte Bedienhandlung einstellt.

11. Vorrichtung zur Unterstützung eines Parkmanövers eines Fahrzeugs, wobei das Fahrzeug eine Einparkhilfe (PDC) aufweist, über welche während eines Parkmanövers ein im Innenraum des Fahrzeugs wahrnehmbares erstes Signal erzeugbar ist, wobei eine Signaleigenschaft dieses ersten Signals dem jeweils aktuell vorliegenden Abstand des Fahrzeugs zu einem Parkhindernis angepasst ist,
**dadurch gekennzeichnet, dass**
die Vorrichtung dazu konfiguriert ist, ein Verfahren nach einem der vorhergehenden Ansprüche durchzuführen.
